# EUROPEAN PATENT APPLICATION

(11) **EP 1 228 737 A2**
(43) Date of publication of application: **07.08.2002**
(21) Application number: 02425040.9
(22) Date of filing: 30.01.2002
(51) Int. Cl.: A61C 1/00, A61C 1/06

(54) **A dental handpiece, especially for a dental unit**

(30) Priority: 31.01.2001 IT BO010051
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

A dental handpiece (100) comprises: a casing (1); a chuck (2) positioned at a first end of the casing (1) providing a quick-release connection to a tool; a tool drive unit (3) located inside the casing (1) and an end element (4) having at least one cable (5) for powering the drive unit (3) and located at the other end of the casing (1). The drive unit (3) is a brushless micromotor equipped, inside the casing (1), with a control unit (6) comprising a plurality of Hall effect sensors (7).

## Description

The present invention relates to a dental handpiece, especially a handpiece connected to a dental unit.

Current dental handpieces may be divided broadly into two groups: instruments used to cut teeth such as turbines and micromotors; and accessory instruments such as syringes and polymerising lamps.

The present invention deals in particular with micromotors. These usually consist of a first casing forming the handle of the handpiece, equipped with an end head by which it can be coupled to a tool (for example, a bur).

The first casing is coupled to a second casing containing a motor. The two casings are coupled coaxially by a quick-release connection located at one end of each of them. The other end of the second casing is connected to a tubular element for supplying water or physiological saline, air used to nebulise the micromotor cooling liquid, and electricity used to drive the micromotor. The tubular element is at the end of a tube leading out of a handpiece mounting tray from which the fluids and electricity used to drive the handpiece are supplied.

In standard handpieces of the latest generation, both the first and second casings have inside them a plurality of separate, sealed conduits for the passage of the cleaning fluids (and the cooling air) to the part near the tool where they are forced out through corresponding holes. This design has been successfully used in the past and not only makes the handpiece practical and easy to handle but also enables the fluid to be evenly distributed and more precisely directed around the working area.

To improve the performance of these handpieces, conventional electric motors with brushes have been substituted by brushless motors which optimise speed control, provide better torque response, reduce noise, friction and overheating and thus increase motor life.

In a first solution taught by prior art, however, a handpiece driven by a brushless motor has a very limited number of operating rpm ranges (especially in terms of the minimum rpm required for this type of handpiece) because there is no room inside it for a control unit or probe with electronic feedback, since it is fully occupied by a multiplicity of electric, air and water lines.

In some cases, therefore, the limitations on the use of this solution may be unacceptable for dentists.

Another solution taught by prior art for handpieces with brushless motors is restricted to the field of implants. In this second solution, the handpiece comprises a brushless motor with an electronic feedback control system that accurately controls the rpm of the motor itself. The handpiece casing, however, does not have all the usual accessory lines for cleaning, lighting, etc.

Up to the present time, therefore, there is no one handpiece whether for traditional, conservative treatments or for implants, that combines the above mentioned possible technical characteristics (namely, wide operating ranges) with traditional accessory elements for illuminating, cleaning, etc. The aim of the present invention is to overcome the above mentioned disadvantages by providing a handpiece driven by a brushless micromotor with a wide range of operating speeds that allow it to be used both as a traditional handpiece and for implants, with a continuous feedback control system for the motor and with the full set of conventional accessories all in a compact structure no larger than those of customary handpieces.

The above mentioned aim is substantially achieved by a dental handpiece comprising: a casing; a chuck positioned at a first end of the casing providing a quick-release connection to a tool; a tool drive unit located inside the casing; and an end element having at least one cable for powering the drive unit and located at the other end of the casing. The drive unit is a brushless micromotor equipped, inside the casing, with a control unit comprising a plurality of Hall effect sensors.

The technical features of the present invention, in accordance with the above-mentioned aims, are set out in the claims below and the advantages more clearly illustrated in the detailed description which follows, with reference to the accompanying drawings, which illustrate a preferred embodiment of the invention without restricting the scope of the inventive concept, and in which:
- Figure 1 is a longitudinal sectional view of a dental handpiece for dental units made according to the present invention;
- Figure 2 is a cross section through line II - II in the handpiece as shown in Figure 1;
- Figure 3 is a cross section through line III - III in the handpiece as shown in Figure 1;
- Figure 4 is a cross section through line IV - IV in the handpiece as shown in Figure 1;
- Figure 5 is a cross section through line V - V in the handpiece as shown in Figure 4.

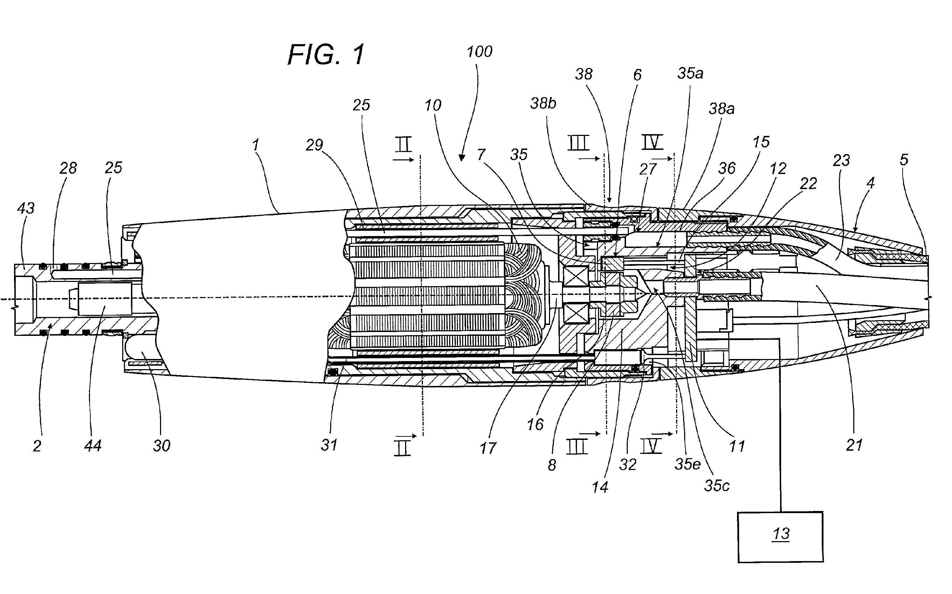

With reference to the accompanying drawings, in particular Figure 1, the dental handpiece according to the invention, labelled 100 in its entirety, is used especially in a dental unit both for tooth cutting operations and for implants, although the solution disclosed can be applied to handpieces that are separate from the dental unit, typically for implants, without departing from the scope and spirit of the inventive concept.

To simplify the description of the invention, the accompanying drawings illustrate a traditional handpiece known in the trade as a micromotor. The main parts of the micromotor are: a casing 1; a chuck 2 positioned at a first end of the casing 1 and providing a quick-release connection to a tool mounting attachment (not illustrated); a unit 3 for driving the tool and housed inside the casing 1; and an end element 4 having at least one cable 5 for supplying the drive unit 3 located at the other end of the casing 1.

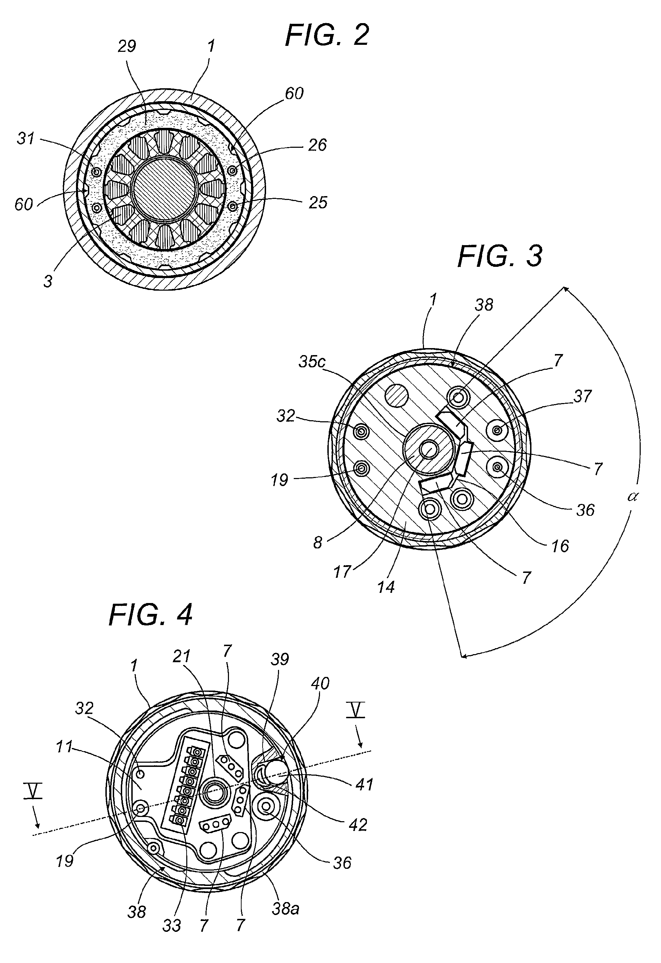

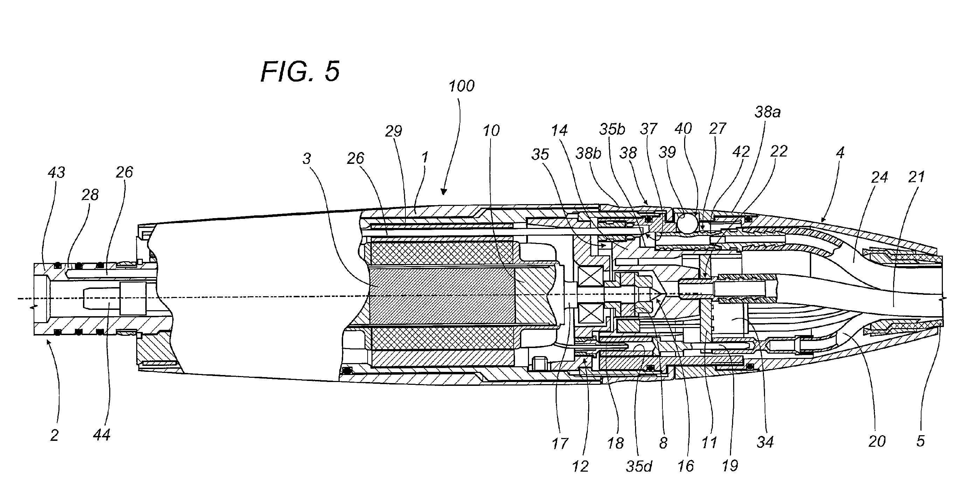

Looking also at Figures 4 and 5, the end element 4 also has two first conduits 23 and 24 for supplying, respectively, air and water or physiological saline. The casing 1 comprises a lamp 30, which is used to illuminate the working area of the tool and which is located near the chuck 2 and powered by two electrical conductors 31.

Figures 1 and 5 clearly show that the drive unit 3 is a brushless micromotor equipped, inside the casing 1, with a unit 6 that comprises a plurality of Hall effect sensors 7 with which the speed of the micromotor can be controlled continuously according to whether the handpiece is being used for traditional/conservative treatments or for implants.

With reference also to Figure 3, the control unit 6 comprises three Hall effect 7 sensors positioned around a reference magnet 8 connected to a rotor 10 at the back of the brushless micromotor 3.

Looking in more detail, the three Hall effect sensors 7 are positioned around the reference magnet 8 to cover an angle α of approximately 120°.

As shown in Figures 1, 3, 4 and 5, the three sensors 7 are mounted on a plate 11 connected to the inside of the casing 1. The plate 11 comprises means 12 for connecting the three sensors 7 and the brushless micromotor 3 to a unit 13 for controlling and activating the brushless micromotor 3 itself. The unit 13 is schematically illustrated as a block since it is of customary type an forms part of the main power supply and drive system of the motor.

In practice, the handpiece 100 has been designed and constructed to allow the connection between the moving parts and the supply connections through a block 35 located between the brushless micromotor 3 and the end element 4.

The block 35 comprises the aforementioned plate 11 and a bush-like extension 14 which, on the side facing the brushless micromotor 3, houses the Hall effect sensors 7, the reference magnet 8 and the protruding part 17 of the rotor at the back of the brushless micromotor 3.

The bush-like extension 14 supports the three sensors 7, which are electrically connected to the plate 11 through corresponding contacts 15 (forming the aforementioned connecting means 12), and has a central hole 16 that houses the reference magnet 8 and the protruding part 17 of the back rotor 10.

The connecting means 12, on the side of the brushless micromotor 3, comprise a flexible element 18 ending with a quick-disconnect contact extending from the back rotor 10 to the plate 11. The plate 11 is in turn equipped with a contact into which a lead 19 connecting to a power supply cable 20 from the end element 4 is plugged.

A conduit 21 leads out of the end element 4 and connects at a central hole 22 in the mounting plate 11 to blow a fluid (air) for cooling the brushless micromotor 3 into the area near the reference magnet 8, where the brushless micromotor 3 is mounted in the casing 1.

As mentioned above, also leading out of the end element there are two first conduits 23 and 24 for supplying, respectively, air and water or physiological saline. To enable these two fluids to reach the area near the tool, the casing 1 is equipped with two respective second conduits 25 and 26 that have corresponding means 27 for connecting them to the two first conduits 23 and 24 so that the fluids flow right through the casing 1, over the plate 11 and the three sensors 7 and are forced out of the chuck 2 through openings 28 in a direction radial to the chuck itself.

As clearly shown also in Figure 2, the two second conduits 25 and 26 extend partly inside an annular support 29 or stator of the brushless micromotor 3, said stator 29 being fixed to the casing 1.

Figure 2 also shows that the stator 29 has a plurality of grooves 60 for the passage of the cooling air. The grooves 60 run lengthways at equidistant intervals along the outer surface of the stator 29: the grooves 60 allow the air from the conduit 21 to flow out uniformly.

The aforementioned means 27 for connecting the two first conduits 23 and 24 to the two second conduits 25 and 26 consist of intermediate sealed sections 36 and 37 made on the bush-like extension 14 forming part of the block 35.

The block 35 is connected partly to the end portion of the casing 1 thanks to the bush-like extension 14 and partly to a ring nut 38 designed to connect the casing 1 to the end element 4.

The ring nut 38 has a socket 39 that houses cam-like means 40 which regulates the flow within the first, water or physiological saline supply conduit 24 and which can be operated by turning the ring nut 38.

As clearly shown in Figures 4 and 5, the cam-like means 40 consist of a ball 41 positioned between the ring nut 38 and an elastically deformable tubular element 42, engaged in the corresponding intermediate section 37 in the bush-like extension 14 so that turning the ring nut 38 enlarges or reduces the section of the tubular element 42 for the passage of the water or physiological saline.

Looking in more detail, the ring nut 38 is divided into two separate parts: the first part 38a is connected to the end element 4 and allows fastening and adjustment of the first conduit 24 that supplies the water or physiological saline, while the second part 38b is screwed to the bush-like extension 14 so as to position it and hold it in place within the casing 1.

Still looking at the constructional architecture of the handpiece 100 and of the block 35 in particular, we have mentioned the fact that the handpiece 100 is equipped with a lamp 30 powered through two leads 31 which are connected (see Figure 5) to the mounting plate 11 through quick disconnecting tubular elements 32 supported by the plate 11 and housed inside the bush-like extension 14 in such a way that the lamp 30 is powered directly by the plate 11.

To power all these devices, the plate 11 has on the surface of it facing the end element 4 a plurality of electrical contacts 33 (see also Figure 4) through which signals are exchanged between, and power supplied to, the brushless micromotor 3, the Hall effect sensors 7 and the lamp 30.

The electrical contacts 33 can be plugged at a single, quick-disconnecting block 34 from the end element 4 (clearly shown in Figures 1 and 5).

In other terms, the bush-like extension 14 of the block 35 has made in it a plurality of sockets, labelled 16, 35a, 35b, 35c, 35d and 35e, for housing the following, respectively: the reference magnet 8; a part of the second conduits 25 and 26, forming the corresponding intermediate connecting sections 36 and 37 for the supply of air and water or physiological saline; a part of the conduit 21 that supplies the cooling fluid; the quick disconnecting flexible element 18 for powering the brushless micromotor 3; and a part of the pair of leads 31.

The chuck 2 is mounted on the side of the casing 1 opposite the end element 4. The chuck 2 consists of an external fitting 43 for the tool mounting attachment partly protruding from the casing 1 and with its inside end connected to the casing 1 that houses the brushless micromotor 3.

The external fitting 43 has a tubular inside section designed to coaxially house a coupling 44 used to drive the tool and connected directly to the brushless micromotor 3.

Thanks to this special structure, the dental handpiece according to the invention fully achieves the aforementioned aims.

The handpiece casing is extremely compact, despite the presence of the brushless micromotor and, in particular, of the control unit with reference magnet and three Hall effect sensors.

This electronic drive unit permits extremely precise control by powering the micromotor phases in appropriate sequence and thus increasing the possible speed ranges (for example from 200 to 50,000 rpm).

This wide range of operating speeds means that handpieces made according to the invention can be used not only for conservative treatment as in the case described above, but also for implants.

Moreover, the cost of the handpiece is very reasonable, especially if considered in relation to the advantages provided by the brushless motor drive, namely, less friction, less heating, lower noise levels, increased working life for the motor and improved torque response for the handpiece.

Despite the introduction of the brushless motor and the Hall effect sensors, the handpiece (whether traditional or for implants) is complete in all its main and accessory parts, that is, fluid supply conduits, illumination of working area, thanks to a special design of the mounting plate block and bush-like extension which optimises the supply and control connections for drive power, fluid supply and illumination.

The invention described can be subject to modifications and variations without thereby departing from the scope of the inventive concept. Moreover, all the details of the invention may be substituted by technically equivalent elements.

## Claims

1. A dental handpiece (100) comprising: a casing (1); a chuck (2) positioned at a first end of the casing (1) providing a quick-release connection to a tool; a tool drive unit (3) located inside the casing (1); and an end element (4) having at least one cable (5) for powering the drive unit (3) and located at the other end of the casing (1), the handpiece being **characterised in that** the drive unit (3) is a brushless micromotor equipped, inside the casing (1), with a control unit (6) designed to continuously control the speed of the micromotor according to whether the handpiece is being used for traditional/conservative treatments or for implants.

2. A dental handpiece (100) comprising: a casing (1); a chuck (2) positioned at a first end of the casing (1) providing a quick-release connection to a tool; a tool drive unit (3) located inside the casing (1); and an end element (4) having at least one cable (5) for powering the drive unit (3) and located at the other end of the casing (1), the handpiece being **characterised in that** the drive unit (3) is a brushless micromotor equipped, inside the casing (1), with a control unit (6) comprising a plurality of Hall effect sensors (7).

3. The handpiece according to claim 1 or 2, **characterised in that** the control unit (6) comprises three Hall effect sensors (7).

4. The handpiece according to claim 1 or 2, **characterised in that** the control unit (6) comprises three Hall effect sensors (7) positioned around a reference magnet (8) connected with a rotor (10) of the brushless micromotor (3).

5. The handpiece according to claim 4, **characterised in that** the three Hall effect sensors (7) are positioned around the reference magnet (8) to cover an angle (α) of 120°.

6. The handpiece according to claim 1 or 2, **characterised in that** between the brushless micromotor (3) and the end element (4) there is a block (35) consisting of a plate (11) and a bush-like extension (14) housed inside the handpiece (100) and designed to support the plurality of Hall effect sensors (7) and to connect the sensors themselves and the brushless micromotor (3) to a control and activation unit (13).

7. The handpiece according to claim 1 or 2, **characterised in that** the control unit (6) comprises three Hall effect sensors (7) positioned around a reference magnet (8) to cover an angle (α) of 120°; the reference magnet (8) being connected with a rotor (10) at the back of the brushless micromotor (3); the three sensors (7) being mounted on a plate (11) connected to the inside of the casing (1) and comprising means (12) for connecting the three sensors (7) and the brushless micromotor (3) to a unit (13) for controlling and activating the brushless micromotor (3) itself.

8. The handpiece according to claim 7, **characterised in that** the plate (11) has a bush-like extension (14) that mounts the three sensors (7), which are electrically connected to the plate (11) through contacts (15); the bush-like extension (14) having a central hole (16) that houses the reference magnet (8) and a part (17) of a rotary shaft connected to the rotor (10).

9. The handpiece according to claim 7, **characterised in that** the means (12) for connecting the brushless micromotor (3) comprise a flexible, quick-disconnecting element (18) extending from the back rotor (10) to the plate (11); the plate (11) being equipped with a lead (19) connecting to a power supply cable (20) from the end element (4).

10. The handpiece according to claim 1 or 2, **characterised in that** the end element (4) comprises a conduit (21) that supplies a fluid for cooling the brushless micromotor (3) and connects at a central hole (22) in the plate (11) to convey the cooling fluid into the area near the reference magnet (8) where the brushless micromotor (3) is mounted in the casing (1).

11. The handpiece according to claim 1 or 2, where the end element (4) has two first conduits (23, 24) for supplying, respectively, air and water or physiological saline, the handpiece being **characterised in that** the casing (1) is equipped with two respective second conduits (25, 26) with corresponding means (27) for connecting them to the two first conduits (23, 24) so that the fluids flow right through the casing (1), over the plate (11) and the three sensors (7) and are forced out of the chuck (2) in a radial direction through openings (28).

12. The handpiece according to claim 11, **characterised in that** the two second conduits (25, 26) extend partly inside an annular support or stator (29) of a brushless micromotor (3), said stator (29) being fixed to the casing (1).

13. The handpiece according to claim 1 or 2, where the casing (1) comprises at least one lamp (30) located near the chuck (2) and powered through two leads (31), **characterised in that** the leads (31) are connected to the mounting plate (11) through quick disconnecting tubular elements (32) housed inside the bush-like extension (14) in such a way that the lamp (30) is powered directly over the plate (11).

14. The handpiece according to claim 7, **characterised in that** the plate (11) has on the surface of it facing the end element (4) a plurality of electrical contacts (33) through which signals are exchanged between, and power supplied to, the brushless micromotor (3), the Hall effect sensors (7) and the lamp (30); the plurality of electrical contacts (33) being plugged at a single, quick-disconnecting block (34) from the end element (4).

15. The handpiece according to claims 7 to 9, **characterised in that** the plate (11) is an integral part of a block (35) comprising the bush-like extension (14) which, on the side facing the brushless micromotor (3), houses the Hall effect sensors (7), the reference magnet (8) and part of the shaft (17) of the brushless micromotor (3).

16. The handpiece according to claims 7 to 9, **characterised in that** the bush-like extension (14) has made in it a plurality of sockets (16, 35a, 35b, 35c, 35d, 35e), for housing the following, respectively: the reference magnet (8); the sensors (7); a part of the second, air and water or physiological saline supply conduits (25, 26); a part of the cooling fluid supply conduit (21); the quick disconnecting flexible element (18) for powering the brushless micromotor (3) ; and a part of the pair of leads (31).

17. The handpiece according to claims 11 and 12, **characterised in that** the means (27) for connecting the two first conduits (23, 24) to the two second conduits (25, 26) consist of intermediate sealed sections (36, 37) made on the bush-like extension (14).

18. The handpiece according to claim 1 or 2, **characterised in that** between the casing (1) and the end element (4) there is a ring nut (38) for connecting the casing (1) to the end element (4); the ring nut (38) having a socket (39) that houses cam-like means (40) which regulate the flow within the first, water or physiological saline supply conduit (24) and which can be operated by turning the ring nut (38).

19. The handpiece according to claim 18, **characterised in that** the cam-like means (40) consist of a ball (41) positioned between the ring nut (38) and an elastically deformable tubular element (42), engaged in the corresponding intermediate section (37) in a bush-like extension (14) so that turning the ring nut (38) enlarges or reduces the section of the tubular element (42) for the passage of the water or physiological saline.

20. The handpiece according to claim 18, **characterised in that** the ring nut (38) is divided into two separate parts, the first part (38a) being connected to the end element (4) and allowing the fastening and adjustment of the first conduit (24) that supplies the water or physiological saline, and the second part (38b) being screwed to a bush-like extension (14), so as to position it and hold it in place within the casing (1).

21. The handpiece according to claim 1 or 2, **characterised in that** the chuck (2) consists of an external fitting (43) for mounting the tool, the outside end of the fitting (43) protruding from the casing (1), while its inside end is connected to the casing (1); the external fitting (43) having a tubular inside section designed to coaxially house a coupling (44) used to drive the tool and connected directly to the brushless micromotor (3).

22. The handpiece according to claims 11 and 12, **characterised in that** the stator (29) has a plurality of grooves (60) for the passage of the cooling air, running lengthways at equidistant intervals along the outer surface of the stator (29).
